# EUROPÄISCHE PATENTSCHRIFT

(11) **EP 3 126 113 B1**
(45) Veröffentlichungstag und Bekanntmachung des Hinweises auf die Patenterteilung: **20.06.2018**
(21) Anmeldenummer: 15745361.4
(22) Anmeldetag: 02.04.2015
(51) Int. Cl.: B29C 41/28

(54) **BANDGIESSANLAGE MIT SCHWIMMENDER GIESSERLAGERUNG**
CONTINUOUS BELT CASTER WITH FLOATING COATING HEAD
INSTALLATION DE MOULER EN BANDE AVEC UNE TÊTE D'APPLICATION FLOTTANTE

(30) Priorität: 02.04.2014 AT 502442014
(43) Veröffentlichungstag der Anmeldung: 08.02.2017
(73) Patentinhaber: Berndorf Band GmbH, 2560 Berndorf (AT)
(72) Erfinder: MORGENBESSER, Karl, A-2870 Aspang (AT); NAGL, Christian, A-2871 Zöbern (AT)
(74) Vertreter: Burger, Hannes
(86) Internationale Anmeldenummer: PCT/AT2015/050087
(87) Internationale Veröffentlichungsnummer: WO 2015/149104

(56) Entgegenhaltungen:
- WO-A2-2014/032069
- GB-A- 2 133 721
- JP-A- 2001 079 864
- JP-A- 2003 001 654
- JP-B1- S5 011 428
- JP-B2- H0 640 987

## Beschreibung

Die Erfindung betrifft eine Bandgießanlage, welche wenigstens eine erste und eine zweite Bandrolle, ein auf diesen Bandrollen laufendes endloses Metallband und einen Behälter mit einer dem Metallband zugewandten und von diesem beabstandeten Austrittsöffnung umfasst.

Eine solche Anordnung ist aus dem Stand der Technik grundsätzlich bekannt. Bandgießanlagen der genannten Art werden in der Regel für die Herstellung plattenförmiger oder filmartiger Werkstoffe eingesetzt. Beispielsweise werden sie zur Herstellung von Filmen für die Fotografie, LCD-Bildschirmen oder aber von Kunststein ("Engineered Stone") verwendet. Die verwendeten Bänder bestehen zumeist aus Stahl und weisen eine geschliffene und/oder polierte Oberfläche auf. Der Behälter, welcher das aufzutragende Material aufnimmt, respektive dessen Austrittsöffnung ist starr an einem Maschinenrahmen befestigt. Zur Herstellung eines Films oder einer Platte wird ein flüssiges oder pastöses Material über die genannte Austrittsöffnung auf das Endlosband aufgetragen und kann, von diesem transportiert, verschiedene Bearbeitungsstationen, zum Beispiel eine Härtungsstation, durchlaufen, bevor der zumindest teilweise erstarrte Werkstoff von dem genannten Endlosband wieder abgehoben wird. Das Endlosband und die damit verbundene Antriebseinheit sind in diesem Fall also auch Teil einer Fördereinrichtung.

Zudem können Schwingungen im Lauf des Endlosbands auftreten, welche durch den Antrieb oder andere auf das Metallband einwirkende Baugruppen verursacht sind. Bei Bandgießanlagen wird häufig jene Bandrolle, über welcher das Material auf die Bandoberfläche aufgegossen wird, angetrieben. Das Abziehen des auf der Bandoberfläche verfestigten Films des Materials erfolgt dagegen häufig auf einer dieser Bandrolle gegenüberliegenden Bandrolle, um die das Endlosband umläuft. Das Abziehen kann - insbesondere wegen des als Feder wirkenden Endlosbands - zu Schwingungen in dem Endlosband führen.

Nachteilig an den bekannten Bandgießanlagen ist daher, dass Unregelmäßigkeiten des Metallbands, insbesondere Dickenunterschiede und Welligkeiten, sowie Abweichungen der Bandrollen von der Zylinderform sowie Schwingungen, zu einer Verminderung der Qualität des hergestellten Endprodukts führen, da sich die genannten Unregelmäßigkeiten und Abweichungen auf dem aufgetragenen Film wiederfinden. Insbesondere weist der nach dem Stand der Technik hergestellte Film eine vergleichsweise hohe Welligkeit beziehungsweise ungleichmäßige Dicke sowie inhomogene Materialeigenschaften auf.

Aus der JP 2001079864 A und der JP 2003039459 A ist auch bekannt, den Abstand zwischen einer Austrittsöffnung einer Gießeinrichtung und einem Band der Bandgießanlage elektronisch zu regeln. Nachteilig ist dabei der hohe regelungstechnische Aufwand sowie die Tatsache, dass - insbesondere für schnelle Bewegungen - relativ leistungsstarke Antriebe nötig sind.

Die JP H06 40987 B2 zeigt eine Auftragsvorrichtung, bei der die Austrittsöffnung des Behälters über Abstandhalter oder Rollen auf dem Band gelagert ist. Die JP S50 11428 B1 zeigt eine Bandgiessanlage nach dem Oberbegriff des Anspruchs 1, wobei der Behälter mittels Kugelrollen auf dem Band gelagert ist.

Eine Aufgabe der Erfindung ist es daher, eine verbesserte Bandgießanlage anzugeben. Insbesondere sollen unerwünschte Dickenvariationen und eine Welligkeit des mit der Bandgießanlage hergestellten Films nach Möglichkeit vermieden oder gegenüber dem Stand der Technik wenigstens reduziert werden. Ein regelungstechnischer Aufwand hierfür soll vermieden oder wenigstens gering gehalten werden.

Diese Aufgabe wird durch eine Bandgießanlage nach Anspruch 1 gelöst. Erfindungsgemäß wird der genannte Behälter oder ein Abstandshalter für die Austrittsöffnung auf der ersten Bandrolle aufliegend gelagert. Die Austrittsöffnung "schwimmt" oder "schwebt" gleichsam auf einem imaginären Luftpolster, welcher auf der Umlenkrolle aufliegt und eine konstante Dicke aufweist. Der genannte Behälter oder ein Abstandshalter für die Austrittsöffnung ist mit Hilfe von Kufen und/oder Rollen gelagert, welche erfindungsgemäß auf der ersten Bandrolle aufliegen.

Der Begriff "schwimmende Lagerung" bedeutet im Rahmen der Erfindung also eine Lagerung, welche zumindest eine vertikale Ausgleichsbewegung der genannten Austrittsöffnung des Behälters zulässt, sodass ein Abstand zwischen der Austrittsöffnung und der ersten Bandrolle (Fall b) weitgehend konstant bleibt. Zwischen der genannten Austrittsöffnung des Behälters und einer Abstützung einer Achse einer Bandrolle besteht somit keine starre Verbindung, beispielsweise über einen in sich steifen Maschinenrahmen. Bewegungen in anderen Richtungen als der vertikalen können (in einem gewissen Bereich) zugelassen werden, notwendig ist dies aber nicht.

Durch die vorgestellten Maßnahmen kann der Behälter respektive dessen Austrittsöffnung den Abweichungen der Bandrollen von der Zylinderform und Schwingungen im Lauf des Metallbands folgen. Der Abstand zwischen Austrittsöffnung und Metallband und die Dicke des auf das Metallband aufgetragenen Films bleiben daher weitgehend konstant. Die Qualität des mit der vorgestellten Bandgießanlage hergestellten Films wird durch die genannten Maßnahmen somit deutlich verbessert. Die Lagerung der Austrittsöffnung/des Behälters kann schleifend (z.B. mit Kufen) oder rollend (z.B. mit Rollen) erfolgen. Durch die schwimmende Lagerung kann insbesondere auch ein regelungstechnischer Aufwand für die Einhaltung des genannten Abstands vermieden oder wenigstens gering gehalten werden.

Unter dem genannten "Abstand" ist im Rahmen der Erfindung insbesondere der Querabstand beziehungsweise Normalabstand zwischen Bandrolle und Austrittsöffnung zu verstehen. Bei Umlenkrollen entspricht der genannte Abstand insbesondere dem Radialabstand zwischen Umlenkrolle und Austrittsöffnung.

Weitere vorteilhafte Ausgestaltungen und Weiterbildungen der Erfindung ergeben sich aus den Unteransprüchen sowie aus der Beschreibung in Zusammenschau mit den Figuren. Günstig ist es, wenn die Austrittsöffnung gegenüber dem Behälter starr angeordnet und der Behälter gegenüber der ersten Bandrolle schwimmend gelagert ist. Auf diese Weise ergeben sich ein vergleichsweise einfacher mechanischer Aufbau, insbesondere wenn der besagte Behälter einfach über dem Metallband angeordnet ist und die Austrittsöffnung an der Unterseite des Behälters vorgesehen ist. Günstig ist es aber auch, wenn die Austrittsöffnung mit dem Behälter flexibel verbunden und die Austrittsöffnung gegenüber der ersten Bandrolle schwimmend gelagert ist. Bei dieser Variante ist die Austrittsöffnung hinsichtlich einer Bewegung quer zum Metallband entkoppelt, beispielsweise indem die Austrittsöffnung am Ende eines mit dem Behälter verbundenen Schlauchs angeordnet ist. Dadurch kann die Masse, die den Unebenheiten der ersten Bandrolle folgen soll, klein gehalten werden. Dadurch sind auch die dazu notwendigen Kräfte relativ klein. An dieser Stelle wird angemerkt, dass der Behälter, welche das aufzutragende Material aufnimmt, nicht notwendigerweise über dem Metallband respektive in dessen Nähe angeordnet sein muss, wenngleich dies von Vorteil ist. Der Behälter kann auch abgesetzt vom Metallband angeordnet sein.

In einer weiteren vorteilhaften Ausführungsform der Bandgießanlage ist die Austrittsöffnung im Bereich der als Umlenkrolle ausgeführten ersten Bandrolle angeordnet, an welcher die Richtung des Metallbands geändert wird. Bei dieser Variante der Bandgießanlage erfolgt der Filmauftrag also in einem Abschnitt des Metallbands, in dem dieses um eine Umlenkrolle geführt ist. Vorteilhaft läuft dieses dort aufgrund der Spannung desselben besonders ruhig. Da das Metallband - abhängig vom Umschlingungswinkel und der Spannung desselben - in der Regel nicht von einer Umlenkrolle abhebt, kann die Lagerung der Austrittsöffnung/des Behälters auf der Umlenkrolle erfolgen. Besonders vorteilhaft ist es in obigem Zusammenhang, wenn die Austrittsöffnung - wenn die erste Umlenkrolle von einer Seite betrachtet wird, in der sie sich gegen den Uhrzeigersinn dreht - in einer Position von 12:00 Uhr bis inklusive 3:00 Uhr angeordnet ist. Dadurch werden die oben genannten Vorteile mit günstigen Verhältnissen für den Filmauftrag kombiniert, indem bei dieser Anordnung sowohl die gute Auflage des Metallbands auf der Umlenkrolle als auch die die Schwerkraft für den Filmauftrag genützt werden.

Vorteilhaft ist es zudem, wenn die Austrittsöffnung im Bereich der als Unterstützungsrolle ausgeführten ersten Bandrolle angeordnet ist, an welcher die Richtung des Metallbands gleich bleibt. Bei dieser Variante der Bandgießanlage erfolgt der Filmauftrag also in einem geraden Abschnitt des Metallbands, insbesondere in einem horizontalen Abschnitt desselben. Um übermäßigen Bewegungen des Metallbands im Bereich der Austrittsöffnung vorzubeugen, ist dieses dort über eine Unterstützungsrolle geführt.

Günstig ist es darüber hinaus, wenn die Austrittsöffnung beziehungsweise der Behälter gegenüber der ersten Bandrolle verschiebbar und/oder schwenkbar gelagert ist. Bei dieser Variante der Bandgießanlage ist die Austrittsöffnung respektive der Behälter beispielsweise mit Hilfe von Schienen oder Linearführungen linear und/oder mit Hilfe eines Drehgelenks schwenkbar gelagert. Die Lagerung soll dabei so ausgeführt sein, dass eine Bewegung des Behälters/der Austrittsöffnung quer zum Metallband möglich ist. Insbesondere erfolgt die Lagerung vorteilhaft so, dass der Behälter/die Austrittsöffnung normal oder im Wesentlichen normal (d.h. in einem Bereich 90°±10°) zur Zylinderoberfläche der Bandrolle verfahrbar ist.

In einer weiteren vorteilhaften Variante umfasst die Bandgießanlage einen auf den Behälter und/oder die Austrittsöffnung wirkenden Aktor, welche dazu eingerichtet ist, den Abstand zwischen dem Behälter/der Austrittsöffnung und der ersten Bandrolle zu beeinflussen. Auf diese Weise kann die Dicke des mit der Bandgießanlage erzeugten Films beeinflusst werden. Beispielsweise können so unterschiedlich dicke Produkte hergestellt werden.

Besonders vorteilhaft ist es in diesem Zusammenhang, wenn die Bandgießanlage eine Regelung umfasst, welche mit dem genannten Aktor und einem Abstandssensor verbunden ist und dazu eingerichtet ist, den genannten Abstand zu regeln. Dadurch ist es möglich, die Dicke des mit der Bandgießanlage hergestellten Films auch dann konstant zu halten, wenn der Behälter respektive die Austrittsöffnung den Unebenheiten der ersten Bandrolle nicht vollständig folgen kann, was insbesondere bei hohen Bandgeschwindigkeiten, vergleichsweise starken Unebenheiten der ersten Bandrolle und/oder relativ geringen Auflagekräften des Behälters/der Austrittsöffnung auf die erste Bandrolle passieren kann.

Weiterhin ist es von Vorteil, wenn die Bandgießanlage eine Steuerung umfasst, welche mit dem genannten Aktor und einem Filmabrisssensor verbunden ist und dazu eingerichtet ist, den Behälter respektive die Austrittsöffnung vom Metallband abzuheben, wenn ein Abriss eines auf das Metallband aufgetragenen Films detektiert wird. Zwar wird der mit der Bandgießanlage erzeugte Film mit einer geeigneten Vorrichtung von dem Metallband abgehoben, jedoch ist dieser in vielen Fällen so dünn beziehungsweise flexibel, dass er auch im Bereich von Umlenkrollen prinzipiell auf dem Metallband haften bleibt. Wenn die Abhebevorrichtung versagt kann der Film auf dem endlosen Metallband daher zurück zur Austrittsöffnung des Behälters transportiert werden und diese verstopfen beziehungsweise im schlimmsten Fall eine Havarie der Bandgießanlage verursachen. Mit einem Filmabrisssensor kann jedoch ein Abriss des vom Metallband abgehobenen Films detektiert und der Behälter respektive die Austrittsöffnung vom Metallband abgehoben werden, um das besagte Verstopfen der Austrittsöffnung respektive eine Havarie der Bandgießanlage zu vermeiden. Das Metallband kann dann in Folge langsam und mit geringer Bremsleistung angehalten werden, was insbesondere bei großen Massenträgheiten des Metallbands und der Bandrollen von Vorteil ist. Selbstverständlich können die genannte Abstandsregelung und die Filmabriss-Steuerung auch (in einem Gerät) kombiniert werden.

In einer weitere vorteilhaften Ausführungsvariante umfasst die Bandgießanlage eine am Behälter und/oder der Austrittsöffnung angreifenden Feder, welche eine Auflagekraft des Behälters/der Austrittsöffnung auf die erste Bandrolle verringert. Dadurch kann eine Auflagekraft des Behälters/der Austrittsöffnung auf die erste Bandrolle auf ein günstiges Maß reduziert werden, wodurch die Lebensdauer der Lagerung des Behälters/der Austrittsöffnung erhöht wird, insbesondere wenn diese durch Kufen verwirklicht ist. Zudem werden auch die Stellkräfte und die Stellzeit für einen auf den Behälter und/oder die Austrittsöffnung wirkenden Aktor verringert. Dadurch kann eine vergleichsweise schnell reagierende Regelung beziehungsweise Filmabriss-Steuerung bei vertretbarem Energieaufwand realisiert werden.

Vorteilhaft ist es aber auch, wenn die Bandgießanlage eine am Behälter und/oder der Austrittsöffnung angreifenden Feder umfasst, welche eine Auflagekraft des Behälters/der Austrittsöffnung auf die erste Bandrolle erhöht. Dadurch kann eine Auflagekraft des Behälters/der Austrittsöffnung auf die erste Bandrolle auf ein günstiges Maß erhöht werden, wodurch ein Abheben des Behälters/der Austrittsöffnung von der erste Bandrolle vermieden wird, insbesondere bei hohen Bandgeschwindigkeiten und/oder vergleichsweise starken Unebenheiten der ersten Bandrolle.

Dadurch werden Dickenunterschiede des mit der Bandgießanlage erzeugten Films wirksam vermieden.

Zum besseren Verständnis der Erfindung wird diese anhand der nachfolgenden Figuren näher erläutert.

Es zeigen jeweils:
- Fig. 1: ein schematisch dargestelltes Beispiel einer Bandgießanlage in Seitenansicht;
- Fig. 2: die Bandgießanlage aus Fig. 1 von oben;
- Fig. 3 bei: ein Beispiel, das nicht Teil der Erfindung ist und dem die Austrittsöffnung des Behälters mit Hilfe von Kufen gegenüber dem Metallband schwimmend gelagert ist;
- Fig. 4: die Bandgießanlage aus Fig. 3 von vorne;
- Fig. 5: ein Beispiel, bei dem erfindungsgemäß die Austrittsöffnung des Behälters mit Hilfe von Kufen gegenüber der Bandrolle schwimmend gelagert ist;
- Fig. 6: ein Beispiel, bei dem die Austrittsöffnung des Behälters mit Hilfe einer Rolle im Bereich einer Umlenkrolle für das Metallband gelagert ist;
- Fig. 7: ein Beispiel, bei dem die Austrittsöffnung des Behälters im Bereich einer Unterstützungsrolle für das Metallband gelagert ist;
- Fig. 8: ein Beispiel, bei dem die Austrittsöffnung mit dem Behälter flexibel verbunden ist;

- Fig. 9: ein Beispiel, bei dem eine Feder an der Austrittsöffnung angreift;
- Fig. 10: ein Beispiel, bei dem ein mit einer Abstandregelung verbundener Aktor an der Austrittsöffnung angreift;
- Fig. 11: ein Beispiel für eine Bandgießanlage mit einer Steuerung zur Detektion eines Filmabrisses;
- Fig. 12: ein Beispiel für eine lineare Lagerung des Behälters;
- Fig. 13: ein Beispiel für eine Schwenklagerung des Behälters und
- Fig. 14: ein Beispiel für eine Lagerung des Behälters mittels einer Parallelogrammführung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

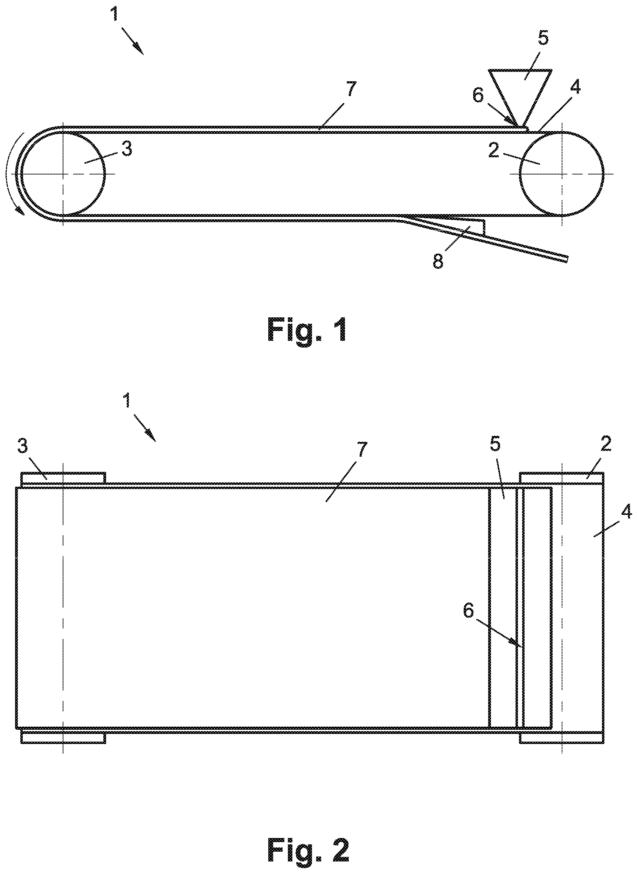

Die Fig. 1 zeigt ein schematisch dargestelltes Beispiel einer Bandgießanlage 1 in Seitenansicht, die Fig. 2 in Draufsicht. Die Bandgießanlage 1 umfasst eine erste und eine zweite Bandrolle 2, 3, ein auf diesen Bandrollen 2, 3 laufendes endloses Metallband 4 sowie einen Behälter 5 mit einer dem Metallband 4 zugewandten und von diesem beabstandeten Austrittsöffnung 6. Ein in den Behälter 5 eingefülltes flüssiges oder pastöses Material wird über die genannte Austrittsöffnung 6 auf das Endlosband 4 aufgetragen, wodurch der Film 7 entsteht. Dieser kann vom Metallband 4 transportiert verschiedene Bearbeitungsstationen durchlaufen, zum Beispiel eine Härtungsstation (nicht dargestellt), bevor er - zumindest teilweise erstarrt - mit Hilfe eines optionalen Abhebekeils 8 vom Endlosband 4 wieder abgehoben wird.

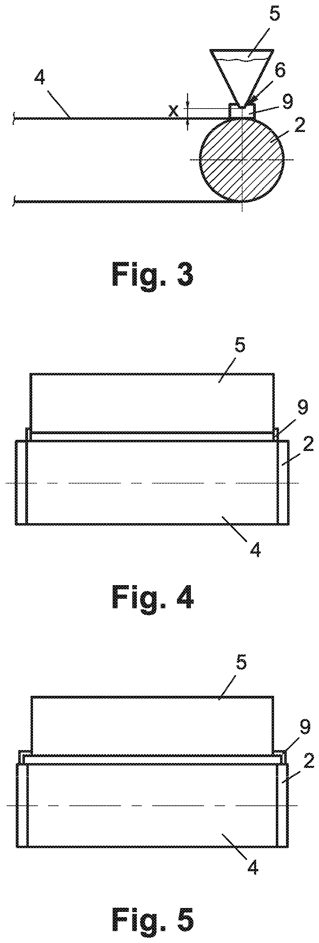

Das Metallband 4 besteht in diesem Beispiel aus Edelstahl und weist eine polierte Oberfläche auf. Alternativ kann das Metallband 4 auch lediglich eine geschliffene Oberfläche aufweisen. Unregelmäßigkeiten des Metallbands 4, insbesondere Dickenunterschiede und Welligkeiten, sowie Abweichungen der Bandrollen 2, 3 von der Zylinderform und Schwingungen im Lauf des Endlosbands 4 führen jedoch ohne weitere Maßnahmen zu einer Verminderung der Qualität des hergestellten Films 7, da sich die genannten Unregelmäßigkeiten und Abweichungen auf diesem wiederfinden. In der Fig. 3 (Schnittdarstellung) und Fig. 4 (Vorderansicht) wird ein Beispiel dargestellt, bei dem die Austrittsöffnung 6 des Behälters 5 hinsichtlich des Abstands x zwischen der Austrittsöffnung 6 und dem Metallband 4 gegenüber dem Metallband 4 schwimmend gelagert ist. Konkret wird der Behälter 5 mit Hilfe von Kufen 9 gelagert, welche auf dem Metallband 4 aufliegen. Auf diese Weise folgt der Behälter 5 und damit die in diesem Beispiel fix verbundene Austrittsöffnung 6 der Oberfläche des Metallbands 4, wodurch der Abstand x auch bei Abweichungen des Metallbands 4 und Unregelmäßigkeiten in dessen Lauf konstant oder im Wesentlichen konstant ist. Die Qualität des mit der Bandgießanlage 1 hergestellten Films 7 kann auf diese Weise maßgeblich gesteigert werden. Der Abstand x bezeichnet dabei den Querabstand, insbesondere den Normalabstand, zum Metallband 4.

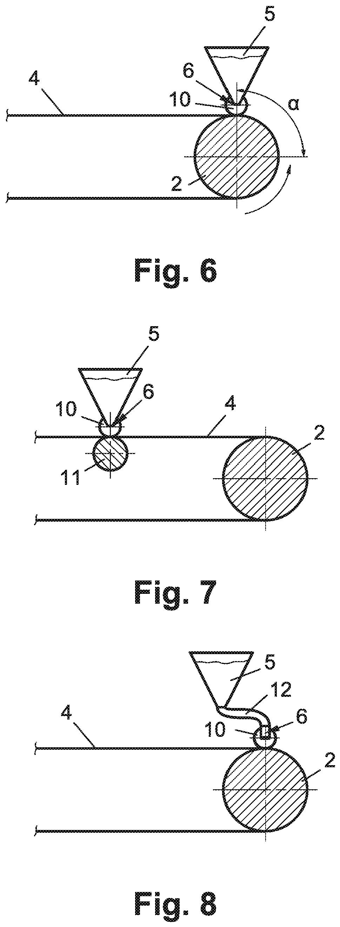

In dem in den Fig. 3 und 4 gezeigten Beispiel wird der Behälter 5 auf dem Metallband 4 gelagert. Erfindungsgemäß wird dagegen die Austrittsöffnung 6 des Behälters 5 hinsichtlich des Abstands zwischen der Austrittsöffnung 6 und der ersten Bandrolle 2 gegenüber dieser ersten Bandrolle 2 schwimmend gelagert, so wie dies in der Fig. 5 dargestellt ist (Fall b). Konkret ist der Behälter 5 mit Hilfe von Kufen 9 gelagert, welche auf der ersten Bandrolle 2 aufliegen. Auf diese Weise kann von den Kufen 9 verursachter Abrieb auf dem Metallband 4 vermieden werden, beziehungsweise kann die gesamte Breite des Metallbands 4 für die Filmherstellung verwendet werden. Der Behälter 5 kann auch mit Hilfe von Rollen 10 gelagert sein, welche erfindungsgemäß auf der ersten Bandrolle 2 aufliegen, so wie dies in der Fig. 6 dargestellt ist. Auf diese Weise wird ein Abrieb auf der ersten Bandrolle 2 praktisch völlig vermieden.

In den in den Fig. 3 bis 6 dargestellten Beispielen ist die Austrittsöffnung 6 im Bereich der als Umlenkrolle ausgeführten ersten Bandrolle 2 angeordnet, an welcher die Richtung des Metallbands 4 geändert wird. Vorteilhaft läuft das Metallband 4 dort aufgrund der Spannung desselben besonders ruhig. Da das Metallband 4 - abhängig vom Umschlingungswinkel und der Spannung desselben - in der Regel nicht von der ersten Umlenkrolle 2 abhebt, kann die Lagerung der Austrittsöffnung 6/des Behälters 5 fast gleichwertig auf dem Metallband 4 selbst oder auf der Umlenkrolle 2 erfolgen. Vorteilhaft ist es, wenn die Austrittsöffnung 6, wenn die erste Umlenkrolle 2 von einer Seite betrachtet wird, in der sie sich gegen den Uhrzeigersinn dreht, in einer Position von 12:00 Uhr bis inklusive 3:00 Uhr angeordnet ist. Dieser Bereich ist in der Fig. 6 mit dem Winkel α angegeben. Durch die vorgeschlagenen Maßnahmen werden sowohl eine gute Auflage des Metallbands 4 auf der Umlenkrolle 2 als auch die die Schwerkraft für den Filmauftrag genützt.

Denkbar ist aber auch, dass die Austrittsöffnung 6 im Bereich der als Unterstützungsrolle ausgeführten ersten Bandrolle 11 angeordnet ist, an welcher die Richtung des Metallbands 4 gleich bleibt, so wie dies in der Fig. 7 dargestellt ist. Bei dieser erfolgt der Filmauftrag also in einem geraden Abschnitt des Metallbands 4, insbesondere in einem horizontalen Abschnitt desselben. Die Unterstützungsrolle 11 verhindert bei dieser Ausführungsform übermäßige vertikale Bewegungen des Metallbands 4 im Bereich der Austrittsöffnung 6.

In den bisherigen Beispielen wurde davon ausgegangen, dass die Austrittsöffnung 6 gegenüber dem Behälter 5 starr angeordnet und der Behälter 6 gegenüber dem Metallband 4 beziehungsweise erfindungsgemäß gegenüber der ersten Bandrolle 2 schwimmend gelagert ist. Dies ist aber nicht zwingend für die Erfindung. Denkbar ist auch, dass die Austrittsöffnung 6 mit dem Behälter 5 flexibel verbunden und die Austrittsöffnung 6 gegenüber dem Metallband 4 beziehungsweise erfindungsgemäß gegenüber der ersten Bandrolle 2 schwimmend gelagert ist, so wie dies in der Fig. 8 schematisch dargestellt ist. Konkret sind der Behälter 5 und die Austrittsöffnung 6 über einen Schlauch 12 miteinander verbunden. Selbstverständlich ist auch eine andere flexible Verbindung zwischen Behälter 5 und Austrittsöffnung 6 gleichwertig denkbar.

Somit kann ein Abstandshalter für die Austrittsöffnung 6 auf dem Metallband 4 oder erfindungsgemäß auf der ersten Bandrolle 2 (Fall b) gelagert sein. Der Abstandshalter für die Austrittsöffnung 6 liegt dann mit Hilfe von Kufen 9 und/oder Rollen 10 auf dem Metallband 4 beziehungsweise erfindungsgemäß auf der ersten Bandrolle 2.

Bei der genannten Variante ist die Austrittsöffnung 6 hinsichtlich einer Bewegung quer zum Metallband 4 vom Behälter 5 entkoppelt. Dadurch kann die Masse, die den Unebenheiten des Metallbands 4 respektive der ersten Bandrolle 2 folgen soll klein gehalten werden. Auf diese Weise folgt die Austrittsöffnung 6 dem Metallband 4 respektive der Bandrolle 2 besonders gut, beziehungsweise sind auch bei hohen Bandgeschwindigkeiten nur vergleichsweise kleine Kräfte dazu nötig,

In der Fig. 8 ist der Behälter 5 nach wie vor über dem Metallband 4 angeordnet. Dies ist für die Erfindung aber nicht zwingend notwendig. Denkbar ist auch, dass der Behälter 5 abgesetzt vom Metallband 4 angeordnet wird.

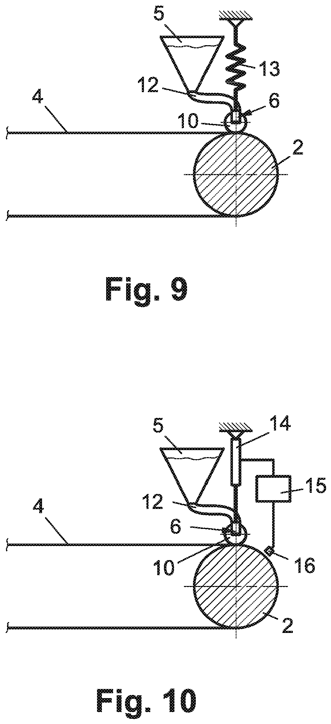

Fig. 9 zeigt nun ein Beispiel, bei dem eine Feder 13 an der Austrittsöffnung 6 angreift, welche eine Auflagekraft des der Austrittsöffnung 6 auf das Metallband 4/die erste Bandrolle 2 verringert. Dadurch wird die Lebensdauer der Lagerung der Austrittsöffnung erhöht wird, insbesondere wenn diese durch Kufen 9 verwirklicht ist. Gleichwertig kann die Feder 13 auch am Behälter 5 angreifen, wenn dieser mit der Austrittsöffnung 6 fix verbunden ist (vergleiche auch Fig. 1 bis 7).

Alternativ kann die Feder 13 die Auflagekraft des Behälters 5/der Austrittsöffnung 6 auf das Metallband 4/die erste Bandrolle 2 auch erhöhen. Beispielsweise wird die Zugkraft der Feder 13 in der Fig. 9 dazu nach unten gerichtet. Durch die vorgeschlagenen Maßnahmen wird ein Abheben des Behälters 5/der Austrittsöffnung 6 vom Metallband 4/von der erste Bandrolle 2 vermieden, insbesondere bei hohen Bandgeschwindigkeiten und/oder vergleichsweise starken Unebenheiten des Metallbands 4/der erste Bandrolle 2.

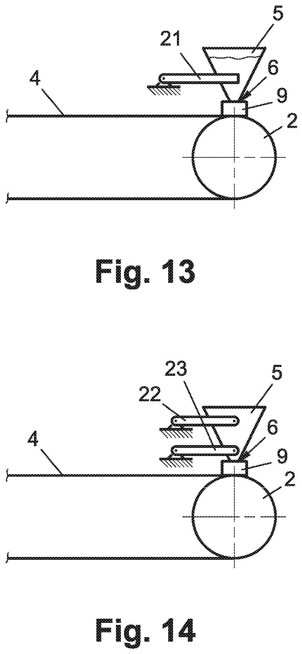

Die Feder 13 kann generell, wie dargestellt, als Schraubenfeder ausgeführt sein. Denkbar ist aber auch, die Feder 13 bei entsprechender Anordnung als Spiralfeder auszuführen (vergleiche insbesondere Fig. 13 und 14). Des Weiteren kann die Feder 13 nicht nur als Zugfeder, sondern auch als Druckfeder ausgebildet sein, beispielsweise als Gasdruckfeder.

Fig. 10 zeigt weiterhin eine Ausführungsform einer Bandgießanlage 1, welche einen auf die Austrittsöffnung 6 wirkenden Aktor 14 umfasst, mit dem der Abstand x zwischen der Austrittsöffnung 6 und dem Metallband 4 beziehungsweise der ersten Bandrolle 2 beeinflusst werden kann. Auf diese Weise kann die Dicke des mit der Bandgießanlage 1 erzeugten Films 7 beeinflusst werden. Beispielsweise können so unterschiedlich dicke Produkte hergestellt oder ein Abrieb der Kufen 9 ausgeglichen werden. Der Aktor 14 kann beispielsweise als Hydraulikzylinder, Pneumatikzylinder oder auch als Spindelantrieb ausgeführt sein. In dem in Fig. 10 gezeigten Beispiel greift der Aktor 14 an der Austrittsöffnung 6 an. Gleichwertig kann der Aktor 14 auch am Behälter 5 angreifen, wenn dieser mit der Austrittsöffnung 6 fix verbunden ist (vergleiche Fig. 1 bis 7). Insbesondere kann der obere Lagerpunkt des Aktors 14 in fixem Abstand zur Achse der Rolle 10 (oder starr mit der Kufe 9) verbunden sein, die auf dem Metallband 4 oder der Bandrolle 2 aufliegt. Das heißt, der obere Lagerpunkt des Aktors 14 ist dann schwimmend gelagert, wodurch mit dem Aktor 14 ein (quasi konstanter) Abstand zwischen der Austrittsöffnung 6 und dem Metallband 4 beziehungsweise der ersten Bandrolle 2 eingestellt wird und Unregelmäßigkeiten des Metallbands 4 beziehungsweise der Bandrolle 2 durch die schwimmende Lagerung ausgeglichen werden.

Fig. 10 zeigt auch eine Regelung 15, welche mit dem genannten Aktor 14 und einem Abstandssensor 16 verbunden ist. Mit Hilfe der Regelung 15 kann der Abstand x geregelt werden. Dadurch ist es möglich, die Dicke des mit der Bandgießanlage 1 hergestellten Films 7 auch dann konstant zu halten, wenn der Behälter 5 respektive die Austrittsöffnung 6 den Unebenheiten des Metallbands 4 beziehungsweise der ersten Bandrolle 2 nicht vollständig folgen kann. Dabei sind sowohl eine schwimmende als auch eine fixe Lagerung des Aktors 14 vorstellbar. Bei letzterer kann der Aktor 14 die Rolle 10 / Kufe 9 zur Einhaltung eines SollAbstands x insbesondere vom Metallband 4 / der Bandrolle 2 abheben.

Generell kann die in Fig. 9 vorgestellte Feder 13 auch dazu eingesetzt werden, um die Stellkräfte und die Stellzeit für den Aktor 14 zu verringern, wenn die Feder 13 die Auflagekraft der Austrittsöffnung 6/des Behälters 5 auf das Metallband 4/die erste Bandrolle 2 verringert. Dadurch kann eine vergleichsweise schnell reagierende Regelung beziehungsweise Filmabriss-Steuerung bei vertretbarem Energieaufwand realisiert werden. Auch die flexible Verbindung der Austrittsöffnung 6 mit dem Behälter 5 mit Hilfe des Schlauchs 12 begünstigt dies, da die zu bewegenden Massen relativ gering sind.

Durch Erhöhung der Auflagekraft des Behälters 5/der Austrittsöffnung 6 auf das Metallband 4/die erste Bandrolle 2 mit Hilfe der Feder 13 kann aber auch der Regelaufwand für die Regelung 15 verringert werden, da der Behälters 5/die Austrittsöffnung 6 dem Metallband 4/der ersten Bandrolle 2 aufgrund der hohen Auflagekraft auch mit geringen Regeleingriffen gut folgt.

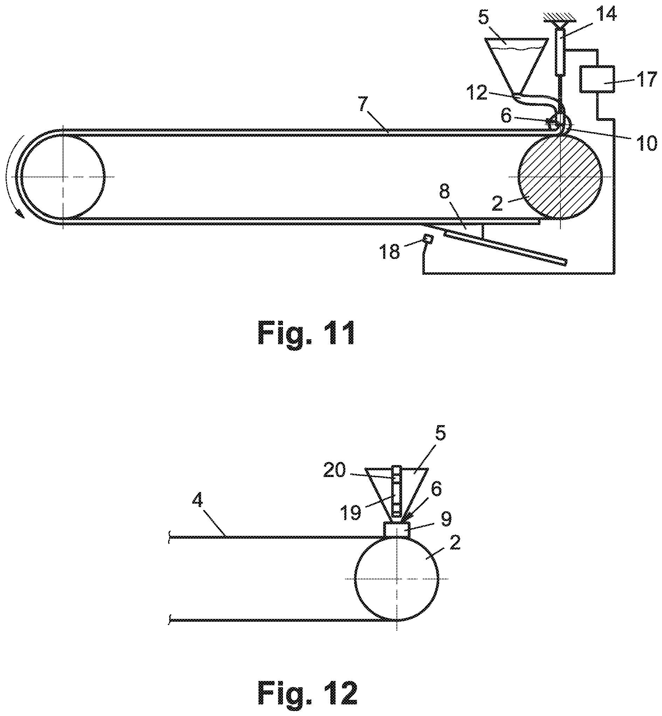

Fig. 11 zeigt nun ein Beispiel, bei dem eine Steuerung 17 mit dem Aktor 14 und einem Filmabrisssensor 18 verbunden ist. Mit Hilfe der Steuerung 17 ist es möglich, den Behälter 5 respektive die Austrittsöffnung 6 vom Metallband 4 abzuheben, wenn ein Abriss eines auf das Metallband 4 aufgetragenen Films 7 detektiert wird. Wenn die Abhebevorrichtung 8 versagt, was prinzipiell möglich ist, kann der Film 7 auf dem endlosen Metallband 4 zurück zur Austrittsöffnung 6 des Behälters 5 transportiert werden und diese verstopfen beziehungsweise im schlimmsten Fall eine Havarie der Bandgießanlage 1 verursachen. Mit dem Filmabrisssensor 18 wird ein solcher Fall nun detektiert, wodurch die oben genannten Folgen vermieden werden können. Das Metallband 7 kann nach dem Abheben der Austrittsöffnung 6/des Behälters 5 langsam und mit geringer Bremsleistung angehalten werden, was insbesondere bei großen Massenträgheiten des Metallbands 4 und der Bandrollen 2, 3 von Vorteil ist.

Der obere Lagerpunkt des Aktors 14 kann wiederum schwimmend gelagert und somit in fixem Abstand zur Achse der Rolle 10 (oder starr mit der Kufe 9) verbunden sein. Der Lagerpunkt des Aktors 14 kann für die Verwendung als Notabhebung aber insbesondere auch direkt am Maschinenrahmen befestigt sein und im Normalbetrieb zum Beispiel eine konstante Kraft auf die Rolle 10 / die Kufe 9 ausüben. Zum Beispiel kann der Aktor 14 dazu als druckbeaufschlagter Pneumatikzylinder oder Hydraulikzylinder ausgebildet sein und die Rolle 10 / die Kufe 9 im Normalbetrieb auf das Metallband 2 / die Bandrolle 2 drücken, bei Erkennung eines Filmrisses diese jedoch vom Metallband 2 / der Bandrolle 2 abheben. Im Normalbetrieb wirkt der Aktor 14 somit ähnlich wie die Feder 13 aus der Fig. 9. Ganz allgemein kann ein Aktor 14 natürlich auch mit einer Feder 13 kombiniert werden.

Denkbar ist weiterhin, dass ein schwimmend gelagerter Aktor 14 mit einem fix gelagerten Aktor 14 kombiniert wird. Beispielsweise kann mit dem schwimmend gelagerten Aktor 14 ein Abstand zwischen der Austrittsöffnung 6 und dem Metallband 4 beziehungsweise der ersten Bandrolle 2 eingestellt und mit dem fix gelagerten Aktor 14 eine Notabhebung ausgeführt werden. Insbesondere ist denkbar, dass die beiden Aktoren 14 von unterschiedlicher Bauart sind. Beispielsweise kann der schwimmend gelagerte Aktor 14 als Spindelantrieb zur feinfühligen Einstellung eines Sollabstands und der fixe Aktor 14 als schnell reagierender Pneumatikzylinder ausgebildet sein.

Generell kann die Austrittsöffnung 6 beziehungsweise der Behälter 5 gegenüber dem Metallband 4 beziehungsweise gegenüber der ersten Bandrolle 2, 11 verschiebbar und/oder schwenkbar gelagert sein. Die Fig. 12 zeigt dazu ein Beispiel einer Linearlagerung. Konkret ist der Behälter 5 mit Hilfe von Kulissensteinen 20 in einer am Maschinenrahmen (nicht dargestellt) fix montierten Schiene 19 vertikal verschiebbar gelagert. Selbstverständlich könnten gleichwertig auch die Schiene 19 auch am Behälter 5 und die Kulissensteine 20 am Maschinenrahmen montiert sein. Denkbar wäre beispielsweise auch, den Behälter 5 mit einer Linearführung verschiebbar zu lagern.

Fig. 13 zeigt weiterhin ein Beispiel, bei dem der Behälter 5 mit Hilfe eines Hebels 21 drehbar gelagert ist. Fig. 14 zeigt schließlich ein Beispiel, bei dem der Behälter 5 mit Hilfe einer durch die beiden Hebel 22 und 23 verwirklichten Parallelogrammführung gelagert ist.

Generell soll die Lagerung des Behälters 5/der Austrittsöffnung 6 eine Bewegung quer zum Metallband 4 zulassen. Insbesondere erfolgt die Lagerung vorteilhaft so, dass der Behälter 5/die Austrittsöffnung 6 normal oder im Wesentlichen normal (d.h. in einem Bereich 90°±10°) zum Metallband 4 oder zur Zylinderoberfläche der Bandrolle 2 verfahrbar ist.

Die Ausführungsbeispiele zeigen mögliche Ausführungsvarianten einer Bandgießanlage 1. Insbesondere können für alle Ausführungsvarianten weitgehend gleichwertig Kufen 9 und/oder Rollen 10 eingesetzt werden. Erfindungsgemäß erfolgt bei allen Ausführungsvarianten die Lagerung auf der ersten Bandrolle 2. Zudem ist auch die starre Anordnung der Austrittsöffnung 6 gegenüber dem Behälter 5 alternativ mit der flexiblen Verbindung derselben bei allen Ausführungsvarianten einsetzbar. Insbesondere wird auch darauf hingewiesen, dass die in den Fig. 9 bis 11 dargestellten Ausführungsvarianten in beliebiger Kombination eingesetzt werden können.

Weiterhin wird festgehalten, dass die Bandgießanlage 1 in der Realität auch mehr oder weniger Bestandteile als dargestellt umfassen kann.

Der Ordnung halber sei abschließend darauf hingewiesen, dass zum besseren Verständnis des Aufbaus der Bandgießanlage 1 diese beziehungsweise deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Bandgießanlage
- 2: erste Bandrolle
- 3: zweite Bandrolle
- 4: Metallband
- 5: Behälter
- 6: Austrittsöffnung
- 7: Film
- 8: Abhebekeil
- 9: Kufe
- 10: Rolle
- 11: Unterstützungsrolle
- 12: Schlauch
- 13: Feder
- 14: Aktor
- 15: Regelung
- 16: Abstandssensor
- 17: Steuerung
- 18: Filmabrisssensor
- 19: Schiene
- 20: Kulissenstein
- 21: Drehhebel
- 22: Drehhebel
- 23: Drehhebel
- α: Winkel
- x: Abstand

## Patentansprüche

1. Bandgießanlage (1), umfassend
- wenigstens eine erste und eine zweite Bandrolle (2, 3),
- ein auf diesen Bandrollen (2, 3) laufendes endloses Metallband (4) und
- einen Behälter (5) mit einer dem Metallband (4) zugewandten und von diesem beabstandeten Austrittsöffnung (6),
**dadurch gekennzeichnet, dass**
die Austrittsöffnung (6) des Behälters (5) hinsichtlich des Abstands (x) zwischen der Austrittsöffnung (6) und der ersten Bandrolle (2) gegenüber dieser ersten Bandrolle (2) schwimmend gelagert ist und dass der genannte Behälter (5) oder ein Abstandshalter für die Austrittsöffnung (6) mit Hilfe von Kufen (9) und/oder Rollen (10) gelagert ist, welche auf der ersten Bandrolle (2) aufliegen.

2. Bandgießanlage (1) nach Anspruch 1, **dadurch gekennzeichnet, dass** die Austrittsöffnung (6) gegenüber dem Behälter (5) starr angeordnet und der Behälter (6) gegenüber der ersten Bandrolle (2) schwimmend gelagert ist.

3. Bandgießanlage (1) nach Anspruch 1, **dadurch gekennzeichnet, dass** die Austrittsöffnung (6) mit dem Behälter (5) flexibel verbunden und die Austrittsöffnung (6) gegenüber der ersten Bandrolle (2) schwimmend gelagert ist.

4. Bandgießanlage (1) nach einem der Ansprüche 1 bis 3, **dadurch gekennzeichnet, dass** die Austrittsöffnung (6) im Bereich der als Umlenkrolle ausgeführten ersten Bandrolle (2) angeordnet ist, an welcher die Richtung des Metallbands (4) geändert wird.

5. Bandgießanlage (1) nach Anspruch 4, **dadurch gekennzeichnet, dass** die Austrittsöffnung (6), wenn die erste Umlenkrolle (2) von einer Seite betrachtet wird, in der sie sich gegen den Uhrzeigersinn dreht, in einer Position von 12:00 Uhr bis inklusive 3:00 Uhr angeordnet ist.

6. Bandgießanlage (1) nach einem der Ansprüche 1 bis 3, **dadurch gekennzeichnet, dass** die Austrittsöffnung (6) im Bereich der als Unterstützungsrolle ausgeführten ersten Bandrolle (11) angeordnet ist, an welcher die Richtung des Metallbands (4) gleich bleibt.

7. Bandgießanlage (1) nach einem der Ansprüche 1 bis 6, **dadurch gekennzeichnet, dass** die Austrittsöffnung (6) beziehungsweise der Behälter (5) gegenüber der ersten Bandrolle (2, 11) verschiebbar und/oder schwenkbar gelagert ist.

8. Bandgießanlage (1) nach einem der Ansprüche 1 bis 7, **gekennzeichnet durch** einen auf den Behälter (5) und/oder die Austrittsöffnung (6) wirkenden Aktor (14), welche dazu eingerichtet ist, den Abstand (x) zwischen dem Behälter (5)/der Austrittsöffnung (6) und der ersten Bandrolle (2, 11) zu beeinflussen.

9. Bandgießanlage (1) nach Anspruch 8, **gekennzeichnet durch** eine Regelung (15), welche mit dem genannten Aktor (14) und einem Abstandssensor (16) verbunden ist und dazu eingerichtet ist, den genannten Abstand (x) zu regeln.

10. Bandgießanlage (1) nach einem der Ansprüche 1 bis 9, **gekennzeichnet durch** eine Steuerung (17), welche mit dem genannten Aktor (14) und einem Filmabrisssensor (18) verbunden ist und dazu eingerichtet ist, den Behälter (5) respektive die Austrittsöffnung (6) vom Metallband (4) abzuheben, wenn ein Abriss eines auf das Metallband (4) aufgetragenen Films (7) detektiert wird.

11. Bandgießanlage (1) nach einem der Ansprüche 1 bis 10, **gekennzeichnet durch** eine am Behälter (5) und/oder der Austrittsöffnung (6) angreifenden Feder (13), welche eine Auflagekraft des Behälters (5)/der Austrittsöffnung (6) auf die erste Bandrolle (2) verringert.

12. Bandgießanlage (1) nach einem der Ansprüche 1 bis 10, **gekennzeichnet durch** eine am Behälter (5) und/oder der Austrittsöffnung (6) angreifenden Feder (13), welche eine Auflagekraft des Behälters (5)/der Austrittsöffnung (6) auf die erste Bandrolle (2) erhöht.

## Claims

1. A continuous belt caster (1) comprising
- at least a first and a second belt roller (2, 3),
- a continuous metal strip (4) running on these belt rollers (2, 3) and
- a container (5) having an outlet opening (6) facing the metal strip (4) and spaced apart therefrom,
**characterized in that**
the outlet opening (6) of the container (5) with respect to the distance (x) between the outlet opening (6) and the first belt idler (2) is mounted in floating fashion in relation to this first belt roller (2) and that the aforementioned container (5) or a spacer for the outlet opening (6) is mounted with the help of skids (9) and/or rollers (10) which lie on the first belt roller (2).

2. The continuous belt caster (1) according to claim 1, **characterized in that** the outlet opening (6) is arranged rigidly with respect to the container (5) and the container (6) is mounted in floating fashion with respect to the first belt roller (2).

3. The continuous belt caster (1) according to claim 1, **characterized in that** the outlet opening (6) is flexibly connected to the container (5) and the outlet opening (6) is mounted in floating fashion with respect to the first belt roller (2).

4. The continuous belt caster (1) according to one of claims 1 to 3, **characterized in that** the outlet opening (6) is arranged in the region of the first belt roller (2) configured as a deflection roller, on which the direction of the metal strip (4) is changed.

5. The continuous belt caster (1) according to claim 4, **characterized in that** the outlet opening (6), when the first deflection roller (2) is observed from one side, in which it rotates in the anticlockwise direction, is arranged in a position from 12 o'clock to 3 o'clock, both inclusive.

6. The continuous belt caster (1) according to one of claims 1 to 3, **characterized in that** the outlet opening (6) is arranged in the region of the first belt roller (11) configured as a support roller, on which the direction of the metal strip (4) remains the same.

7. The continuous belt caster (1) according to one of claims 1 to 6, **characterized in that** the outlet opening (6) or else the container (5) is displaceable and/or is mounted pivotably with respect to the first belt roller (2, 11).

8. The continuous belt caster (1) according to one of claims 1 to 7, **characterized by** an actuator (14) acting on the container (5) and/or the outlet opening (6) which is set up to influence the distance (x) between the container (5)/the outlet opening (6) and the first belt roller (2, 11).

9. The continuous belt caster (1) according to claim 8, **characterized by** a control system (15) which is connected to the aforementioned actuator (14) and a distance sensor (16) and is set up to control the aforementioned distance (x).

10. The continuous belt caster (1) according to one of claims 1 to 9, **characterized by** a control system (17) which is connected to the aforementioned actuator (14) and a film tearing sensor (18) and is set up to lift the container (5) or else the outlet opening (6) from the metal strip (4) when a tear in a film (7) applied to the metal strip (4) is detected.

11. The continuous belt caster (1) according to one of claims 1 to 10, **characterized by** a spring (13) engaging with the container (5) and/or the outlet opening (6) which reduces a bearing force of the container (5)/of the outlet opening (6) on the first belt roller (2).

12. The continuous belt caster (1) according to one of claims 1 to 10, **characterized by** a spring (13) engaging with the container (5) and/or the outlet opening (6) which increases a bearing force of the container (5)/of the outlet opening (6) on the first belt roller (2).

## Revendications

1. Installation de coulée en bandes (1), comprenant
- au moins un premier et un deuxième rouleau de bande (2, 3),
- une bande de métal (4) sans fin défilant sur ces rouleaux de bande (2, 3) et
- un conteneur (5) avec une ouverture de sortie (6) tournée vers la bande de métal (4) et distante de celle-ci,
**caractérisée en ce que**,
concernant la distance (x) entre l'ouverture de sortie (6) et le premier rouleau de bande (2), l'ouverture de sortie (6) du conteneur (5) est supportée de façon flottante par rapport à ce premier rouleau de bande (2), et **en ce que** ledit conteneur (5) ou un élément d'espacement pour l'ouverture de sortie (6) est supporté à l'aide de patins (9) et/ou de rouleaux (10) qui reposent sur le premier rouleau de bande (2).

2. Installation de coulée en bandes (1) selon la revendication 1, **caractérisée en ce que** l'ouverture de sortie (6) est disposée de façon rigide par rapport au conteneur (5), et le conteneur (6) est supporté de façon flottante par rapport au premier rouleau de bande (2).

3. Installation de coulée en bandes (1) selon la revendication 1, **caractérisée en ce que** l'ouverture de sortie (6) est raccordée de façon flexible au conteneur (5), et l'ouverture de sortie (6) est supportée de façon flottante par rapport au premier rouleau de bande (2).

4. Installation de coulée en bandes (1) selon l'une des revendications 1 à 3, **caractérisée en ce que** l'ouverture de sortie (6) est disposée dans la zone du premier rouleau de bande (2), réalisé en tant que rouleau de renvoi, sur lequel la direction de la bande de métal (4) est modifiée.

5. Installation de coulée en bandes (1) selon la revendication 4, **caractérisée en ce que**, quand le premier rouleau renvoi (2) est observé d'un côté dans lequel il tourne dans le sens antihoraire, l'ouverture de sortie (6) est disposée dans une position entre 12h00 et 3h00 comprise.

6. Installation de coulée en bandes (1) selon l'une des revendications 1 à 3, **caractérisée en ce que** l'ouverture de sortie (6) est disposée dans la zone du premier rouleau de bande (11), réalisé en tant que rouleau de soutien, sur lequel la direction de la bande de métal (4) demeure inchangée.

7. Installation de coulée en bandes (1) selon l'une des revendications 1 à 6, **caractérisée en ce que** l'ouverture de sortie (6) ou respectivement le conteneur (5) est supporté(e) de façon coulissante et/ou pivotante par rapport au premier rouleau de bande (2, 11).

8. Installation de coulée en bandes (1) selon l'une des revendications 1 à 7, **caractérisée par** un actionneur (14), agissant sur le conteneur (5) et/ou sur l'ouverture de sortie (6), lequel est agencé pour agir sur la distance (x) entre le conteneur (5)/l'ouverture de sortie (6) et le premier rouleau de bande (2, 11).

9. Installation de coulée en bandes (1) selon la revendication 8, **caractérisée par** une régulation (15) qui est raccordée audit actionneur (14) et à un capteur de distance (16) et qui est agencée pour réguler ladite distance (x).

10. Installation de coulée en bandes (1) selon l'une des revendications 1 à 9, **caractérisée par** une commande (17) qui est raccordée audit actionneur (14) et à un capteur de rupture de film (18), et qui est agencée pour soulever le conteneur (5) respectivement l'ouverture de sortie (6) par rapport à la bande de métal (4) quand une rupture d'un film (7) appliqué sur la bande de métal (4) est détectée.

11. Installation de coulée en bandes (1) selon l'une des revendications 1 à 10, **caractérisée par** un ressort (13) qui agit sur le conteneur (5) et/ou sur l'ouverture de sortie (6) et qui réduit une force d'appui du conteneur (5)/de l'ouverture de sortie (6) sur le premier rouleau de bande (2).

12. Installation de coulée en bandes (1) selon l'une des revendications 1 à 10, **caractérisée par** un ressort (13) qui agit sur le conteneur (5) et/ou sur l'ouverture de sortie (6) et qui augmente une force d'appui du conteneur (5)/de l'ouverture de sortie (6) sur le premier rouleau de bande (2).
